# EUROPEAN PATENT APPLICATION

(11) **EP 3 913 243 A1**
(43) Date of publication of application: **24.11.2021**
(21) Application number: 20741213.1
(22) Date of filing: 09.01.2020
(51) Int. Cl.: F16C 17/06, F16C 27/02

(54) **THRUST FOIL BEARING**

(30) Priority: 18.01.2019 JP 2019006812
(71) Applicant: IHI Corporation, Koto-ku Tokyo 135-8710 (JP)
(72) Inventor: OMORI Naomichi, Tokyo 135-8710 (JP)
(74) Representative: TBK
(86) International application number: PCT/JP2020/000393
(87) International publication number: WO 2020/149200

(57) **Abstract**

A thrust foil bearing (3) includes: a base plate (30) provided with an insertion hole (30a) into which a shaft (1) is inserted; a back foil (20) that is disposed around the insertion hole (30a); and a sandwiched portion (14) that extends from an end portion of the back foil (20) in a circumferential direction of the insertion hole (30a) to an outer side in a radial direction of the insertion hole (30a).

## Description

### [Technical Field]

The present disclosure relates to a thrust foil bearing. Priority is claimed on Japanese Patent Application No. 2019-006812, filed January 18, 2019, the content of which is incorporated herein by reference.

### [Background Art]

Conventionally, as a bearing for a high-speed rotating body, a thrust foil bearing disposed to face a thrust collar provided on a rotation shaft is known (for example, see Patent Document 1 below). The thrust foil bearing has a flexible foil (i.e., thin metal plate) on a bearing surface to absorb the movement of the rotation shaft (i.e., the axial displacement and inclination of the thrust collar) generated by vibration or impact and has a foil structure under the bearing surface to flexibly support the bearing surface.

As the thrust foil bearing, there is a form in which a plurality of top foil pieces and back foil pieces are arranged in the circumferential direction. The top foil piece is supported by the back foil piece and a lubricating fluid is introduced between the top foil piece and the thrust collar with the rotation of the thrust collar. This lubricating fluid forms a wedge-shaped fluid lubricating film between the top foil piece and the thrust collar and the load capacity of the thrust foil bearing is exhibited.

### [Citation List]

### [Patent Document]

[Patent Document 1] International Publication No. 2014/061698

### [Summary of Invention]

### [Technical Problem]

Incidentally, in the above-described related art, since there is concern that a back foil is separated from a base plate, the back foil is attached to the base plate by welding (i.e., spot-welding). However, there is concern that the back foil is deformed by heat when using the welding. As a result, since a top foil supported by the back foil is distorted, there is a possibility that the formation of a fluid lubrication film is affected and a sufficient load capacity of the thrust foil bearing cannot be obtained.

The present disclosure has been made in view of the above-described problems and an object of the present disclosure is to provide a method of attaching a back foil by sandwiching.

### [Solution to Problem]

In order to solve the above-described problems, in the present disclosure, as a first aspect of a thrust foil bearing, a thrust foil bearing includes: a base plate provided with an insertion hole into which a shaft is inserted; a back foil that is disposed around the insertion hole; and a sandwiched portion which extends from an end portion of the back foil in a circumferential direction of the insertion hole to an outer side in a radial direction of the insertion hole.

Further, in the present disclosure, according to a second aspect of the thrust foil bearing, in the first aspect, an annular member may be attached to the base plate, and the sandwiched portion may be sandwiched between the base plate and the annular member.

Further, in the present disclosure, according to a third aspect of the thrust foil bearing, in the second aspect, the thrust foil bearing may further include a fastening member configured to attach the annular member to the base plate and the sandwiched portion may be provided with a through-hole into which the fastening member is inserted.

Further, in the present disclosure, according to a fourth aspect of the thrust foil bearing, in the third aspect, a plurality of the through-holes may be formed in the sandwiched portion.

Further, in the present disclosure, according to a fifth aspect of the thrust foil bearing, in any one of the first aspect to the fourth aspect, the sandwiched portion may be formed in an annular shape.

Further, in the present disclosure, according to a sixth aspect of the thrust foil bearing, in any one of the first aspect to the fifth aspect, the back foil may include: a support portion in which a peak portion and a valley portion are alternately formed; and a flat portion which extends in a circumferential direction from the valley portion disposed at an end portion of the support portion, and the sandwiched portion may be connected to the flat portion.

Further, in the present disclosure, according to a seventh aspect of the thrust foil bearing, in the sixth aspect, the sandwiched portion may be provided with a second flat portion which is formed at a circumferential position different from that of the flat portion and the sandwiched portion may be provided with a second support portion which is connected to the second flat portion and is independent from the support portion.

Further, in the present disclosure, according to an eighth aspect of the thrust foil bearing, in the sixth aspect or the seventh aspect, a circumferential end portion of the flat portion may be provided with a bent portion which is bent toward the base plate.

Further, in the present disclosure, according to a ninth aspect of the thrust foil bearing, in the eighth aspect, the base plate may be provided with an insertion groove into which the bent portion is inserted.

Further, in the present disclosure, according to a tenth aspect of the thrust foil bearing, in the ninth aspect, an end portion of a top foil supported by the back foil may be inserted into the insertion groove.

Further, in the present disclosure, according to an eleventh aspect of the thrust foil bearing, in the tenth aspect, an end portion of the top foil may be provided with a second bent portion which comes into contact with an end portion of the bent portion accommodated in the insertion groove in a reverse insertion direction.

Further, in the present disclosure, according to a twelfth aspect of the thrust foil bearing, in any one of the sixth aspect to the eighth aspect, the thrust foil bearing may further include a top foil which is attached to the flat portion.

### [Advantageous Effects of Invention]

According to the present disclosure, it is possible to provide a method of attaching a back foil by sandwiching. Further, it is possible to suppress a decrease in load capacity of a thrust foil bearing due to distortion of a top foil.

### [Brief Description of Drawings]

FIG. 1 is a side view showing an example of a turbomachine to which a thrust foil bearing of the present disclosure is applied.
FIG. 2 is a side view showing a thrust foil bearing according to a first embodiment of the present disclosure.
FIG. 3 is a plan view showing the thrust foil bearing according to the first embodiment of the present disclosure.
FIG. 4 is a plan view showing a state in which a top foil is separated from a thrust foil bearing 3 shown in FIG. 3.
FIG. 5 is a view of A-A shown in FIG. 3.
FIG. 6 is a plan view showing a top foil shown in FIG. 3.
FIG. 7 is a plan view showing a back foil shown in FIG. 3.
FIG. 8 is a view of B-B shown in FIG. 3.
FIG. 9 is a plan view showing a thrust foil bearing according to a second embodiment of the present disclosure.
FIG. 10 is a plan view showing a top foil piece provided in the thrust foil bearing shown in FIG. 9.
FIG. 11 is a plan view showing a state in which a top foil is separated from the thrust foil bearing shown in FIG. 9.
FIG. 12 is a plan view showing a back foil piece provided in the thrust foil bearing shown in FIG. 9.
FIG. 13 is a plan view showing a thrust foil bearing according to a third embodiment of the present disclosure.
FIG. 14 is a plan view showing a state in which a top foil is separated from the thrust foil bearing shown in FIG. 13.
FIG. 15 is a plan view showing a top foil according to a fourth embodiment of the present disclosure.
FIG. 16 is a circumferential cross-sectional view passing through an inclined portion and an extension portion of the top foil shown in FIG. 15.
FIG. 17 is a plan view showing a top foil according to a modified example of the fourth embodiment of the present disclosure.
FIG. 18 is a circumferential cross-sectional view passing through an inclined portion and an extension portion of the top foil shown in FIG. 17.
FIG. 19 is a plan view showing a thrust foil bearing according to a fifth embodiment of the present disclosure.
FIG. 20 is a plan view showing a state in which a top foil is separated from the thrust foil bearing shown in FIG. 19.
FIG. 21 is a view of C-C shown in FIG. 19.
FIG. 22 is a plan view showing a back foil according to a modified example of the fifth embodiment of the present disclosure.
FIG. 23 is a side view of a back foil according to another modified example of the fifth embodiment of the present disclosure.
FIG. 24 is a plan view showing a top foil according to a sixth embodiment of the present disclosure.
FIG. 25 is a cross-sectional view showing an attachment structure of the top foil with respect to a base plate shown in FIG. 24.
FIG. 26 is a plan view showing a top foil according to a modified example of the sixth embodiment of the present disclosure.
FIG. 27 is a cross-sectional view showing an attachment structure of the top foil with respect to a base plate shown in FIG. 26.
FIG. 28 is a plan view showing a thrust foil bearing according to a seventh embodiment of the present disclosure.

### [Description of Embodiments]

Hereinafter, a thrust foil bearing of the present disclosure will be described in detail with reference to drawings.

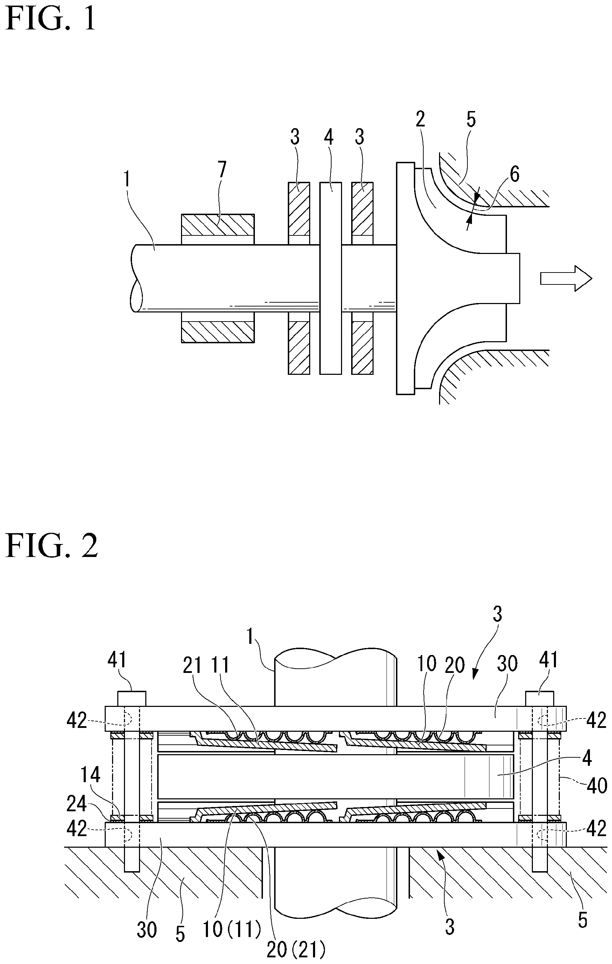

FIG. 1 is a side view showing an example of a turbomachine to which the thrust foil bearing of the present disclosure is applied. In FIG. 1, reference numeral 1 denotes a rotation shaft (i.e., shaft), reference numeral 2 denotes an impeller provided in a front end portion of the rotation shaft, and reference numeral 3 denotes a thrust foil bearing according to the present disclosure.

A disk-shaped thrust collar 4 is attached to the rotation shaft 1. The thrust collar 4 is sandwiched between the pair of thrust foil bearings 3. The impeller 2 is disposed inside a housing 5 on the stationary side and has a tip clearance 6 between the housing 5 and the impeller. That is, the impeller 2 is disposed inside the housing 5 to form the tip clearance 6 between the impeller 2 and the housing 5. The rotation shaft 1 is supported by a radial foil bearing 7.

### (First Embodiment)

FIG. 2 is a side view showing the thrust foil bearing 3 according to a first embodiment of the present disclosure. A pair of the thrust foil bearings 3 is formed on both sides of the thrust collar 4 as shown in FIG. 2. That is, the pair of thrust foil bearings 3 provided on both sides of the thrust collar 4 is provided as the thrust foil bearing 3 with the thrust collar 4 interposed therebetween. The pair of thrust foil bearings 3 has the same configuration. The thrust foil bearing 3 includes a top foil 10, a back foil 20, and a base plate 30. That is, each of the pair of thrust foil bearings 3 includes the top foil 10, the back foil 20, and the base plate 30.

A cylindrical bearing spacer 40 (i.e., annular member) indicated by a two-dotted chain line is sandwiched between the base plates 30 of the pair of thrust foil bearings 3. That is, the cylindrical bearing spacer 40 indicated by a two-dotted chain line is sandwiched between the pair of base plates 30 provided by the pair of thrust foil bearings 3. Then, these base plates 30 are connected to each other through the bearing spacer 40 by a fastening bolt 41 (i.e., fastening member). A through-hole 42 through which the fastening bolt 41 is inserted is formed in the outer peripheral portion of the base plate 30. Additionally, one of the base plates 30 of the present disclosure comes into contact with the housing 5 while being fastened by the fastening bolt 41.

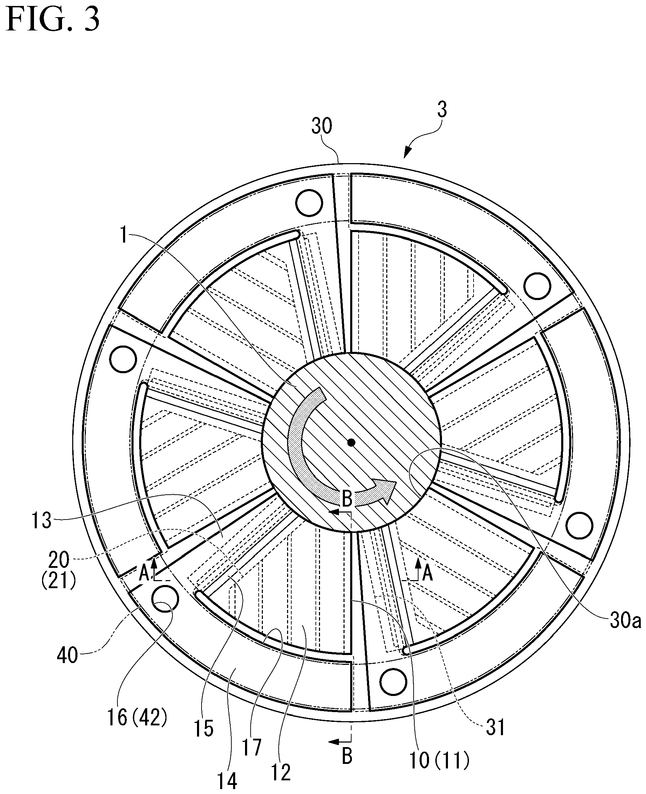

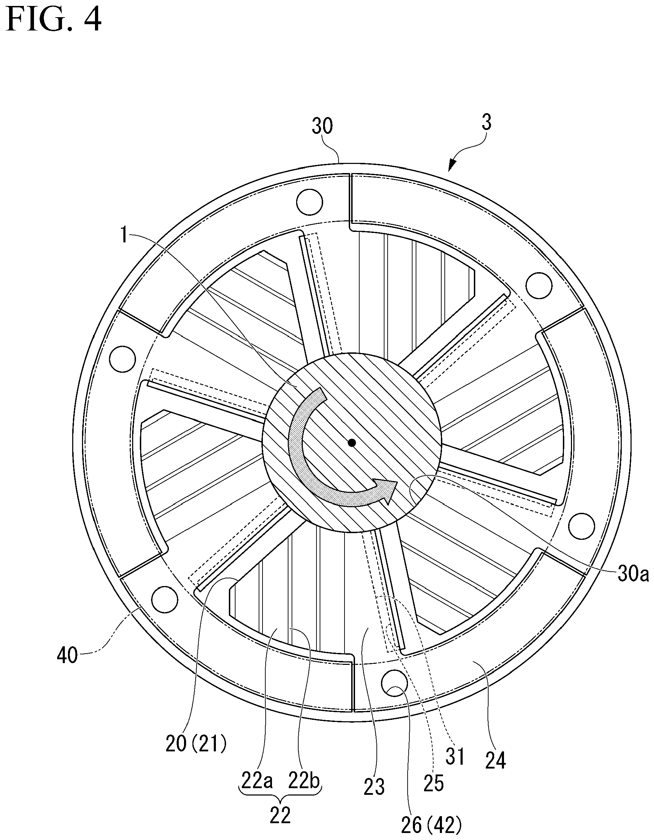

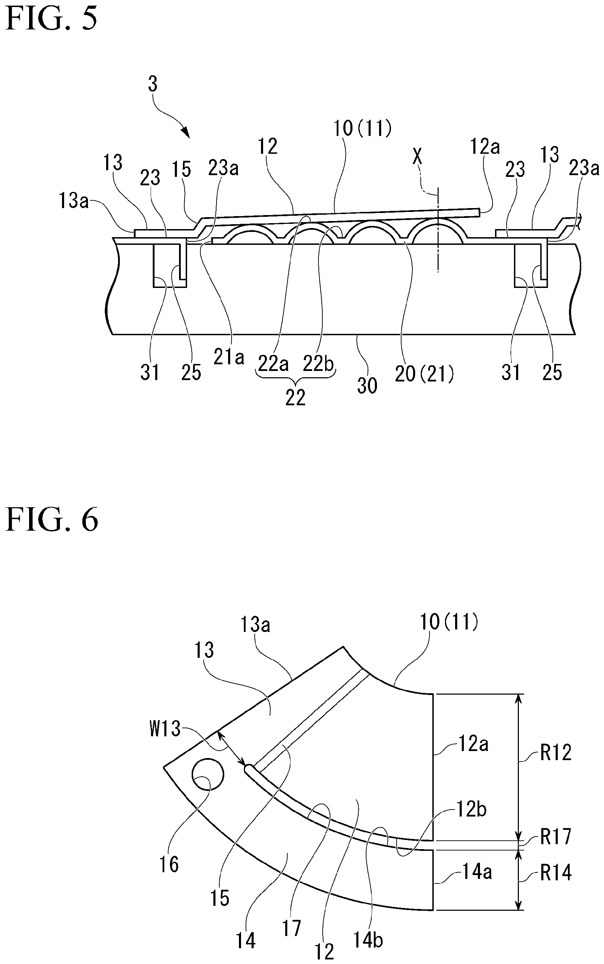

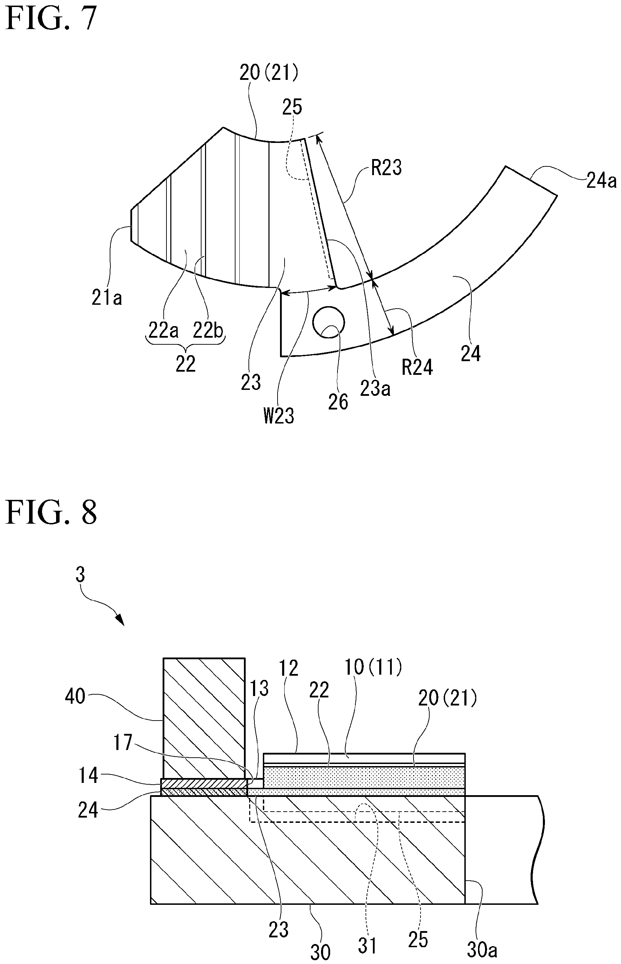

FIG. 3 is a plan view showing the thrust foil bearing 3 according to the first embodiment of the present disclosure. FIG. 4 is a plan view showing a state in which the top foil 10 is separated from the thrust foil bearing 3 shown in FIG. 3. FIG. 5 is a view of A-A shown in FIG. 3. FIG. 6 is a plan view showing the top foil 10 shown in FIG. 3. FIG. 7 is a plan view showing the back foil 20 shown in FIG. 3. FIG. 8 is a view of B-B shown in FIG. 3. The base plate 30 includes, as shown in FIG. 3, an insertion hole 30a through which the rotation shaft 1 is inserted.

Additionally, in the following description, the positional relationship of each member may be described with reference to the insertion hole 30a. Specifically, the "axial direction" means a direction in which the insertion hole 30a extends (i.e., a direction through which the rotation shaft 1 is inserted). Further, the "radial direction" means the radial direction of the insertion hole 30a. Further, the "circumferential direction" means the circumferential direction along the inner circumferential surface of the insertion hole 30a. Alternatively, these directions can be referred to as the "radial direction" and the "circumferential direction" when viewed from the axis of the rotation shaft 1 inserted through the insertion hole 30a based on the axis.

The base plate 30 constitutes the outermost side (i.e., the side counter to the thrust collar 4) of the thrust foil bearing 3 in the axial direction. That is, the side of the anti-thrust collar 4 of the thrust foil bearing 3 in the axial direction means a portion located on the side opposite to a portion closest to the thrust collar 4, that is, a portion farthest from the thrust collar 4 in each thrust foil bearing 3 in the axial direction. The insertion hole 30a is formed in the base plate 30. That is, the base plate 30 of the present disclosure is a disk-shaped member provided with the insertion hole 30a. However, the base plate 30 may be a member other than a disk shape (for example, a rectangular plate shape) if the insertion hole 30a is provided. Further, the insertion hole 30a does not necessarily have to have a strict cylindrical shape.

The base plate 30 is formed by, for example, a metal plate having a thickness of about several mm. The top foil 10 and the back foil 20 are disposed around the insertion hole 30a (i.e., opening) on the flat surface of the base plate 30 disposed to face the thrust collar 4. Specifically, the top foil 10 is supported by the back foil 20 and the back foil 20 is supported by the base plate 30. That is, the top foil 10 is also supported by the base plate 30 through the back foil 20.

In the present disclosure, the top foil 10 and the back foil 20 are each formed by a plurality (i.e., six) of top foil pieces 11 and back foil pieces 21. The base plate 30 supports six top foil pieces 11 and six back foil pieces 21 at equal intervals in the circumferential direction of the flat surface facing the thrust collar 4. Additionally, each of the number of the top foil pieces 11 and the number of the back foil pieces 21 is not limited to six. The number of the top foil pieces 11 and the number of the back foil pieces 21 may not be the same as each other.

As shown in FIG. 3, the top foil 10 is formed by six thin metal plates (i.e., top foil pieces 11) arranged in the circumferential direction. The top foil piece 11 includes an inclined portion 12 which is inclined upward (in FIG. 3, the front side of the paper, that is, the direction toward the front side of the paper or the axial side in the direction from the base plate 30 to the top foil piece 11, that is, the direction of the axial direction from the base plate 30 to the top foil piece 11) from one side in the circumferential direction (i.e., the upstream side in the rotation direction of the rotation shaft 1) toward the other side in the circumferential direction (i.e., the downstream side in the rotation direction of the rotation shaft 1), an extension portion 13 which is provided to be continuous to one side of the inclined portion 12 in the circumferential direction and extends to the outer side in the radial direction, and a sandwiched portion 14 which is provided to be continuous to the extension portion 13 on the outer side in the radial direction in relation to the inclined portion 12 and extends to the other side in the circumferential direction.

As shown in FIG. 6, the inclined portion 12 is formed in a substantially trapezoidal shape in which an apex side of a fan shape is cut out and an inner peripheral side and an outer peripheral side are each arcuate. That is, the inclined portion 12 includes two edges which are separated from each other in the circumferential direction and extends from the inner peripheral side to the outer peripheral side, an inner peripheral edge which connects the two edges on the inner peripheral side, and an outer peripheral edge which connects the two edges on the outer peripheral side. An edge which extends from the inner peripheral side to the outer peripheral side on the other side of the inclined portion 12 in the circumferential direction (hereinafter, referred to as the other circumferential end portion 12a) is a free end.

On the other hand, an edge which extends from the inner peripheral side to the outer peripheral side on one side of the inclined portion 12 in the circumferential direction is connected to the extension portion 13 through a bent portion 15. As shown in FIG. 5, the bent portion 15 includes a first bend and a second bend located on the other side of the first bend in the circumferential direction. The first bend may be paraphrased as a first bend portion and the second bend may be paraphrased as a second bend portion. The first bend is bent toward the back surface side of the surface facing the base plate 30 in the top foil piece 11. The second bend is bent toward the surface side facing the base plate 30 in the top foil piece 11. That is, the bent portion 15 has a step shape. Additionally, all of the first bend and the second bend have obtuse angles.

The inclined portion 12 which is located on the other side of the bent portion 15 in the circumferential direction is supported by a support portion 22 to be described later in the back foil piece 21. The inclined portion 12 which is supported by the support portion 22 is disposed to be inclined at an initial inclination angle while gradually moving away from the base plate 30 as it goes from one side in the circumferential direction to the other side in the circumferential direction. Here, the initial inclination angle means the inclination angle of the top foil piece 11 with respect to the base plate 30 when a load is zero. That is, the initial inclination angle means an angle formed between the base plate 30 and the top foil piece 11 when a load is zero. The base plate 30 of the present disclosure includes a flat surface which spreads in a direction orthogonal to the axial direction and the inclined portion 12 is inclined with respect to the flat surface.

The extension portion 13 is connected to one peripheral side (i.e., first bend side) of the bent portion 15. That is, the extension portion 13 is connected to the bent portion 15 through an end portion on one peripheral side (i.e., first bend side). As shown in FIG. 6, the extension portion 13 is formed in a strip shape extending to the outer side in the radial direction and is connected to the sandwiched portion 14. Similarly to the inclined portion 12, the sandwiched portion 14 is formed in a substantially trapezoidal shape in which an apex side of a fan shape is cut out and an inner peripheral side and an outer peripheral side are each arcuate. That is, the sandwiched portion 14 includes two edges which are separated from each other in the circumferential direction and extend from the inner peripheral side to the outer peripheral side, an inner peripheral edge which connects the two edges on the inner peripheral side, and an outer peripheral edge which connects the two edges on the outer peripheral side.

A circumferential position of an edge which extends from the inner peripheral side to the outer peripheral side on the other side of the sandwiched portion 14 in the circumferential direction (hereinafter, referred to as the other circumferential end portion 14a) matches a circumferential position of the other circumferential end portion 12a of the inclined portion 12. However, the circumferential positions of the end portion 14a of the sandwiched portion 14 and the end portion 12a of the inclined portion 12 may not essentially match each other. Further, a circumferential position of an edge which extends from the inner peripheral side to the outer peripheral side on one side of the sandwiched portion 14 in the circumferential direction matches a circumferential position of an edge which extends from the inner peripheral side to the outer peripheral side on one side of the extension portion 13 in the circumferential direction (hereinafter, referred to as one circumferential end portion 13a).

An edge which extends from the inner peripheral side to the outer peripheral side of the sandwiched portion 14 and connects the two edges on the inner peripheral side (hereinafter, referred to as an inner radial end portion 14b) is radially separated from an edge which extends from the inner peripheral side to the outer peripheral side of the inclined portion 12 and connects the two edges on the outer peripheral side (hereinafter, referred to as an outer radial end portion 12b). That is, a slit 17 is formed between the inner radial end portion 14b of the sandwiched portion 14 and the outer radial end portion 12b of the inclined portion 12.

The slit 17 divides the top foil piece 11 into an inner region and an outer region in the radial direction. The slit 17 extends in the circumferential direction from a first side end extending from the inner peripheral side to the outer peripheral side on the other side of the top foil piece 11 in the circumferential direction to a second side end extending from the inner peripheral side to the outer peripheral side on one side of the top foil piece 11 in the circumferential direction. That is, the first side end of the top foil piece 11 is formed by the other circumferential end portion 12a of the inclined portion 12 and the other circumferential end portion 14a of the sandwiched portion 14 separated from each other by the slit 17. Further, the second side end of the top foil 10 is formed not to be separated from each other by one circumferential end portion 13a of the extension portion 13. The slit 17 of the present disclosure extends to one side in the circumferential direction in relation to the bent portion 15. Further, an R-shape (i.e., round shape) is formed on one side of the slit 17 in the circumferential direction.

A radial dimension R14 of the other circumferential end portion 14a of the sandwiched portion 14 is smaller than a radial dimension R12 of the other circumferential end portion 12a of the inclined portion 12. A ratio between the dimension R12 and the dimension R14 of the present disclosure is about 2:1. Additionally, a radial dimension R17 of the slit 17 is sufficiently smaller than the radial dimension R14 of the sandwiched portion 14.

The inclined portion 12 is disposed in a region on the inside of the slit 17 and the sandwiched portion 14 is disposed in a region on the outside of the slit 17. Here, the region on the outside of the slit 17 is provided to extend to a radial position where the bearing spacer 40 is disposed as shown in FIG. 3. That is, the sandwiched portion 14 is sandwiched between the base plate 30 and the bearing spacer 40 in the axial direction.

The sandwiched portion 14 is provided with a through-hole 16 through which the fastening bolt 41 for fastening the bearing spacer 40 to the base plate 30 is inserted. The through-hole 16 of the sandwiched portion 14 overlaps the through-hole 42 of the base plate 30 in the axial direction. The through-hole 16 of the sandwiched portion 14 is disposed in the vicinity of the connection position of the extension portion 13. A circumferential dimension W13 (see FIG. 6) in which the extension portion 13 is connected to the sandwiched portion 14 is larger than the diameter of the through-hole 16.

Further, the radial dimension R14 of the sandwiched portion 14 of the present disclosure is larger than the diameter of the through-hole 16. As shown in FIG. 3, the radial dimension R14 of the sandwiched portion 14 may be substantially the same as the radial dimension from the inner peripheral surface to the outer peripheral surface of the bearing spacer 40 so that the substantially entire part comes into contact with the bearing spacer 40. Further, the sandwiched portion 14 may have a circumferential length of about 60° (i.e., about 1/6 in the entire circumference) of 360° in the entire circumference of the bearing spacer 40. Accordingly, six top foil pieces 11 (and sandwiched portions 14) are sandwiched in the substantially entire circumference of the bearing spacer 40.

As shown in FIG. 4, the back foil 20 is formed by six thin metal plates (i.e., back foil pieces 21) arranged in the circumferential direction. The back foil piece 21 includes a support portion 22 which supports the inclined portion 12 of the top foil piece 11, a flat portion 23 which is provided to be continuous to the other side of the support portion 22 in the circumferential direction, and a sandwiched portion 24 which is provided to extend from the flat portion 23 to the outer side in the radial direction.

The support portion 22 is, as shown in FIG. 5, a corrugated foil (i.e., bump foil) in which a peak portion 22a and a valley portion 22b are alternately formed. The support portion 22 elastically supports the inclined portion 12 of the top foil piece 11. Additionally, as the support portion 22, for example, a bump foil, a spring foil described in Japanese Unexamined Patent Application No. 2006-57652 or Japanese Unexamined Patent Application No. 2004-270904, a back foil described in Japanese Unexamined Patent Application No. 2009-299748, and the like can be used.

Additionally, the spring foil described in Japanese Unexamined Patent Application No. 2006-57652 or Japanese Unexamined Patent Application No. 2004-270904 and the back foil described in Japanese Unexamined Patent Application No. 2009-299748 are foils used in the radial bearing, but when theses are developed in a plane and formed in an annular plate shape, the foil (i.e., support portion 22) used for the thrust foil bearing 3 is obtained.

The support portion 22 of the present disclosure is formed from the bump foil. In the plan view shown in FIG. 3, the support portion 22 is formed to be further smaller than the inclined portion 12 of the top foil piece 11. Thus, the support portion 22 is covered with the inclined portion 12. As shown in FIG. 7, the support portion 22 is formed in a substantially trapezoidal shape in which an apex side of a fan shape is cut out and an inner peripheral side and an outer peripheral side are each arcuate. That is, the support portion 22 includes two edges which are separated from each other in the circumferential direction and extend from the inner peripheral side to the outer peripheral side, an inner peripheral edge which connects the two edges on the inner peripheral side, and an outer peripheral edge which connects the two edges on the outer peripheral side.

An edge which extends from the inner peripheral side to the outer peripheral side on one side of the support portion 22 in the circumferential direction (hereinafter, one circumferential end portion) is provided with a parallel portion (hereinafter, referred to as a back foil end portion 21a) which extends in parallel to an edge which extends from the inner peripheral side to the outer peripheral side on the other side of the support portion 22 in the circumferential direction (hereinafter, the other circumferential end portion). The valley portion 22b and the peak portion 22a are alternately connected to the support portion 22 from the back foil end portion 21a toward the other circumferential end portion of the support portion 22. That is, the valley portion 22b and the peak portion 22a are alternately connected in the normal direction orthogonal to each of the back foil end portion 21a to the other circumferential end portion of the support portion 22 (i.e., the normal direction is also referred to as a direction orthogonal to the ridge of the peak portion 22a).

As shown in FIG. 5, the valley portion 22b faces the base plate 30 provided with a flat surface. Further, the peak portion 22a is an arch-shaped portion connecting adjacent valley portions 22b. The back foil piece 21 is supported by the base plate 30. Therefore, the valley portion 22b can be in contact with the base plate 30. Both end portions of the support portion 22, that is, the back foil end portion 21a and the other circumferential end portion of the support portion 22 are provided with the valley portion 22b.

In the present disclosure, each of the valley portions 22b and the peak portions 22a is formed at the substantially equal pitch. Further, the height of the peak portion 22a is formed to be increased in order shown in FIG. 5 from the back foil end portion 21a toward the other circumferential end portion of the support portion 22, that is, toward the downstream side in the rotation direction of the rotation shaft 1 (i.e., thrust collar 4) indicated by an arrow in FIG. 3 (i.e., from one side to the other side in the circumferential direction). The other circumferential end portion 12a of the inclined portion 12 is located on the other side in the circumferential direction in relation to a virtual line X supported by the peak portion 22a located on the most other side of the support portion 22 in the circumferential direction. Here, the virtual line X is a tangent line in which the support portion 22 is in contact with the inclined portion 12 on the most downstream side in the rotation direction of the rotation shaft 1.

As shown in FIG. 7, the flat portion 23 has a shape in which the valley portion 22b disposed at the other circumferential end portion of the support portion 22 extends to the other side in the circumferential direction. That is, the flat portion 23 has a flat surface flush with the valley portion 22b. The other circumferential end portion 23a of the flat portion 23 is provided with a bent portion 25 bent toward the base plate 30. As shown in FIG. 5, the bent portion 25 is bent substantially at a right angle to the base plate 30. As shown in FIG. 7, the bent line of the bent portion 25 extends linearly in the radial direction. That is, the bent line of the bent portion 25 extends in parallel to the other circumferential end portion 23a of the flat portion 23.

As shown in FIG. 5, the base plate 30 is provided with an insertion groove 31 into which the bent portion 25 of the back foil piece 21 is inserted. In the plan view shown in FIG. 4, the insertion groove 31 has a rectangular shape extending in the radial direction and is formed at a plurality (i.e., six) of positions in the base plate 30 at intervals in the circumferential direction. The bent portions 25 of six back foil pieces 21 are respectively inserted into six insertion grooves 31.

As shown in FIG. 5, the bent portion 25 can come into contact with a side wall surface on the other side of the insertion groove 31 in the circumferential direction. Accordingly, the movement of the back foil piece 21 (and support portion 22) to the other side in the circumferential direction is restricted. That is, when a load is applied to the support portion 22, the bent portion 25 comes into contact with a side wall surface on the other side of the insertion groove 31 in the circumferential direction so that the movement toward the other side in the circumferential direction is restricted. In contrast, the back foil end portion 21a which is a free end moves toward one side in the circumferential direction. Further, as shown in FIG. 5, the extension portion 13 of the top foil piece 11 is disposed on the flat portion 23 in an overlapping state. Accordingly, it is possible to suppress the bent portion 25 from being separated from the insertion groove 31.

As shown in FIG. 7, the sandwiched portion 24 is provided to extend outward in the radial direction of the flat portion 23 and extends to the other side in the circumferential direction. Substantially similarly to the support portion 22, the sandwiched portion 24 is formed in a substantially trapezoidal shape in which an apex side of a fan shape is cut out and an inner peripheral side and an outer peripheral side are each arcuate. That is, the sandwiched portion 24 includes two edges which are separated from each other in the circumferential direction and extend from the inner peripheral side to the outer peripheral side, an inner peripheral edge which connects the two edges on the inner peripheral side, and an outer peripheral edge which connects the two edges on the outer peripheral side.

A circumferential position of an edge which extends from the inner peripheral side to the outer peripheral side on the other side of the sandwiched portion 24 in the circumferential direction (hereinafter, referred to as the other circumferential end portion 24a) is located on the other side in the circumferential direction in relation to a circumferential position of the other circumferential end portion 23a of the flat portion 23. Further, a circumferential position of an edge which extends from the inner peripheral side to the outer peripheral side on one side of the sandwiched portion 24 in the circumferential direction is located on one side in the circumferential direction in relation to the circumferential position of the other circumferential end portion 23a of the flat portion 23. Additionally, a circumferential position of an edge which extends from the inner peripheral side to the outer peripheral side on one side of the sandwiched portion 24 in the circumferential direction is located on the other side in the circumferential direction in relation to the other circumferential end portion (i.e., valley portion 22b) of the support portion 22.

A radial dimension R24 of the sandwiched portion 24 is smaller than a radial dimension R23 of the flat portion 23. A ratio between the dimension R23 and the dimension R24 is about 2:1. As shown in FIG. 4, the sandwiched portion 24 is provided to extend to a radial position where the bearing spacer 40 is disposed. That is, the sandwiched portion 24 is sandwiched between the base plate 30 and the bearing spacer 40 in the axial direction similarly to the sandwiched portion 14 of the top foil piece 11. That is, as shown in FIG. 8, the sandwiched portion 24 of the back foil piece 21 overlaps the sandwiched portion 14 of the top foil piece 11 and is sandwiched between the base plate 30 and the bearing spacer 40.

As shown in FIG. 4, the sandwiched portion 24 is provided with a through-hole 26 through which the fastening bolt 41 for attaching the bearing spacer 40 to the base plate 30 is inserted. The through-hole 26 of the sandwiched portion 24 overlaps the through-hole 42 of the base plate 30 in the axial direction. The through-hole 26 of the sandwiched portion 24 is disposed in the vicinity of the connection position of the flat portion 23. A circumferential dimension W23 (see FIG. 7) in which the flat portion 23 is connected to the sandwiched portion 24 is larger than the diameter of the through-hole 26.

The plurality of top foil pieces 11 are arranged in the base plate 30 in the circumferential direction. Further, a gap is formed between the top foil pieces 11 adjacent to each other in the circumferential direction to separate them in the circumferential direction. Similarly, a gap is also formed between the sandwiched portions 14 of the top foil pieces 11 adjacent to each other in the circumferential direction to separate them in the circumferential direction. The sandwiched portion 24 of the present disclosure extends to a position overlapping the gap between the sandwiched portions 14 in the axial direction.

Further, the radial dimension R14 of the sandwiched portion 24 of the present disclosure is larger than the diameter of the through-hole 26. As shown in FIG. 4, the radial dimension R24 of the sandwiched portion 24 may be substantially the same as the radial dimension from the inner peripheral surface to the outer peripheral surface of the bearing spacer 40 so that the substantially entire part of the bearing spacer 40 can contact. Further, the sandwiched portion 24 may have a circumferential length of about 60° in the entire circumference of 360° of the bearing spacer 40. Accordingly, six back foil pieces 21 (and sandwiched portions 24) are sandwiched in the entire circumference of the bearing spacer 40.

Next, an action of the thrust foil bearing 3 with such a configuration will be described. As shown in FIG. 2, the thrust foil bearing 3 is provided on both sides with the thrust collar 4 interposed therebetween. Therefore, the movement of the rotation shaft 1 on both sides in the thrust direction can be suppressed.

When the rotation shaft 1 rotates in this state and the thrust collar 4 starts to rotate, a surrounding fluid is pushed into a wedge-shaped space formed between the thrust collar 4 and the top foil piece 11 while the thrust collar and the top foil piece rub against each other. Then, when the thrust collar 4 reaches a certain rotation speed, a fluid lubrication film is formed therebetween. Due to the pressure of the fluid lubrication film, the top foil piece 11 is pressed against the back foil piece 21 and the thrust collar 4 comes out of the contact with the top foil piece 11 and rotates in a non-contact manner.

Here, as shown in FIG. 3, the top foil 10 of the present disclosure includes the slit 17 which divides the inner region and the outer region in the radial direction of the insertion hole 30a, the sandwiched portion 14 which is disposed on the outer region in relation to the slit 17, the extension portion 13 which extends from the sandwiched portion 14 to the inner region in relation to the slit 17, and the inclined portion 12 which extends from one side in the circumferential direction to the other side in the circumferential direction of the insertion hole 30a with respect to the extension portion 13 in the inner region and is inclined with respect to the flat surface of the base plate 30 spreading in a direction orthogonal to the axial direction of the insertion hole 30a. According to this configuration, it is possible to provide a method of attaching the top foil 10 by sandwiching. That is, since the sandwiched portion 14 is sandwiched, the top foil 10 can be attached to the base plate 30 without welding. Thus, there is no concern that the top foil 10 (particularly, the inclined portion 12) can be deformed due to heat. Further, since the sandwiched portion 14 (i.e., outer region) and the inclined portion 12 (i.e., inner region) are divided by the slit 17, the inclined portion 12 (i.e., inner region) is deformed as before (i.e., pressing deformation to the back foil 20 and the base plate 30). Further, even when a frictional force when rubbing against the thrust collar 4 (before forming the fluid lubrication film) or a frictional force due to the fluid lubrication film during non-contact rotation acts on the inclined portion 12, the inclined portion 12 is suppressed from moving from a fixed position since the inclined portion 12 is connected to the sandwiched portion 14 through the extension portion 13.

Further, in the present disclosure, the fastening bolt 41 for attaching the bearing spacer 40 to the base plate 30 is provided and the sandwiched portion 14 is provided with the through-hole 16 through which the fastening bolt 41 is inserted. Since the sandwiched portion 14 can be positioned when the fastening bolt 41 is inserted through the through-hole 16, it is easy to sandwich the sandwiched portion 14 between the base plate 30 and the bearing spacer 40.

Further, in the present disclosure, as shown in FIG. 5, the other circumferential end portion 12a of the inclined portion 12 is a free end. Accordingly, when a load is applied to the inclined portion 12, the other circumferential end portion 12a of the inclined portion 12 can be moved toward the other side in the circumferential direction. That is, the inclined portion 12 can be pressed and deformed toward the back foil 20 and the base plate 30 as before.

Further, as shown in FIG. 4, the thrust foil bearing 3 of the present disclosure includes the base plate 30 having the insertion hole 30a into which the rotation shaft 1 is inserted and the back foil 20 disposed around the insertion hole 30a and includes the sandwiched portion 24 which extends outward in the radial direction of the insertion hole 30a from the end portion of the back foil 20 in the circumferential direction of the insertion hole 30a. According to this configuration, it is possible to provide a method of attaching the back foil 20 by sandwiching. That is, it is possible to attach the back foil 20 to the base plate 30 by the sandwiched portion 24 without welding. Thus, there is no concern that the back foil 20 (particularly, the support portion 22) is deformed due to heat. Therefore, the distortion of the top foil 10 (particularly, the inclined portion 12) supported by the back foil 20 is suppressed. Further, since the sandwiched portion 24 is sandwiched, the movement of the back foil 20 from a fixed position is suppressed.

Further, in the present disclosure, the bearing spacer 40 is attached to the base plate 30 and the sandwiched portions 14 and 24 are sandwiched between the base plate 30 and the bearing spacer 40. Accordingly, it is possible to sandwich the back foil 20 together with the top foil 10 by using the bearing spacer 40 ensuring a space of the base plates 30 of the pair of thrust foil bearings 3.

Further, in the present disclosure, the fastening bolt 41 for attaching the bearing spacer 40 to the base plate 30 is provided and the sandwiched portion 24 may be provided with the through-hole 26 through which the fastening bolt 41 is inserted. Since the sandwiched portion 24 can be positioned when the fastening bolt 41 is inserted through the through-hole 26, it is easy to sandwich the sandwiched portion 24 between the base plate 30 and the bearing spacer 40.

Further, in the present disclosure, as shown in FIG. 5, the back foil 20 includes the support portion 22 in which the peak portion 22a and the valley portion 22b are alternately formed and the flat portion 23 which extends in the circumferential direction from the valley portion 22b disposed at the end portion of the support portion 22 and the sandwiched portion 24 is connected to the flat portion 23. Accordingly, since the support portion 22 is connected to the sandwiched portion 24 through the flat portion 23, the support portion 22 pressed from the inclined portion 12 having received a load is suppressed from moving from a fixed position.

Further, in the present disclosure, the circumferential end portion 23a of the flat portion 23 is provided with the bent portion 25 which is bent toward the base plate 30. Accordingly, it is possible to increase the rigidity (i.e., second moment of area) of the flat portion 23 against bending in the radial direction. Thus, the floating of the support portion 22 cantilevered and supported by the flat portion 23 on the inner side in the radial direction can be suppressed on the outer side in the radial direction.

Further, in the present disclosure, the base plate 30 is provided with the insertion groove 31 into which the bent portion 25 is inserted. Accordingly, when the support portion 22 is pressed toward the base plate 30 by the inclined portion 12, the bent portion 15 comes into contact with the side wall surface of the insertion groove 31 on the other side in the circumferential direction so that the movement of the back foil piece 21 (and support portion 22) toward the other side in the circumferential direction is restricted and the back foil end portion 21a which is a free end can be moved toward one side in the circumferential direction.

### (Second Embodiment)

Next, a second embodiment of the present disclosure will be described. In the following description, the same or equivalent configurations as those in the above-described embodiment are designated by the same reference numerals, and the description thereof will be simplified or omitted.

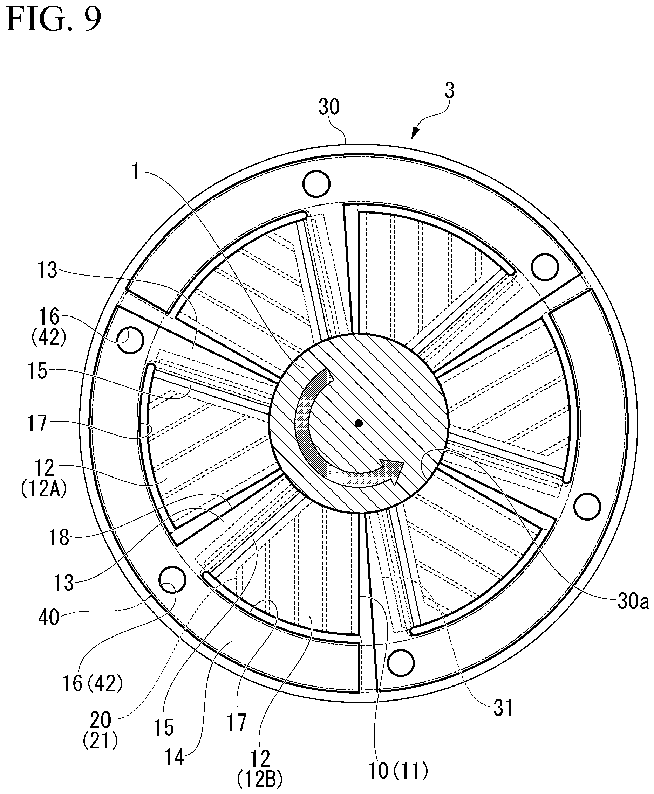

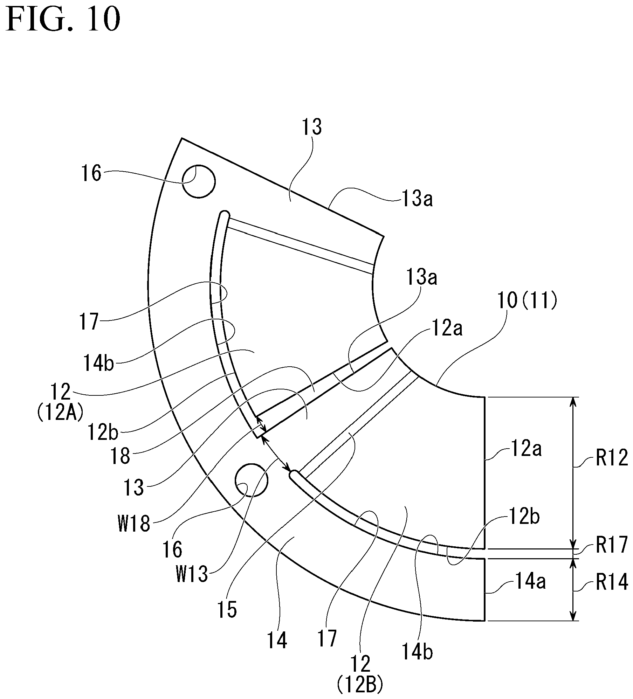

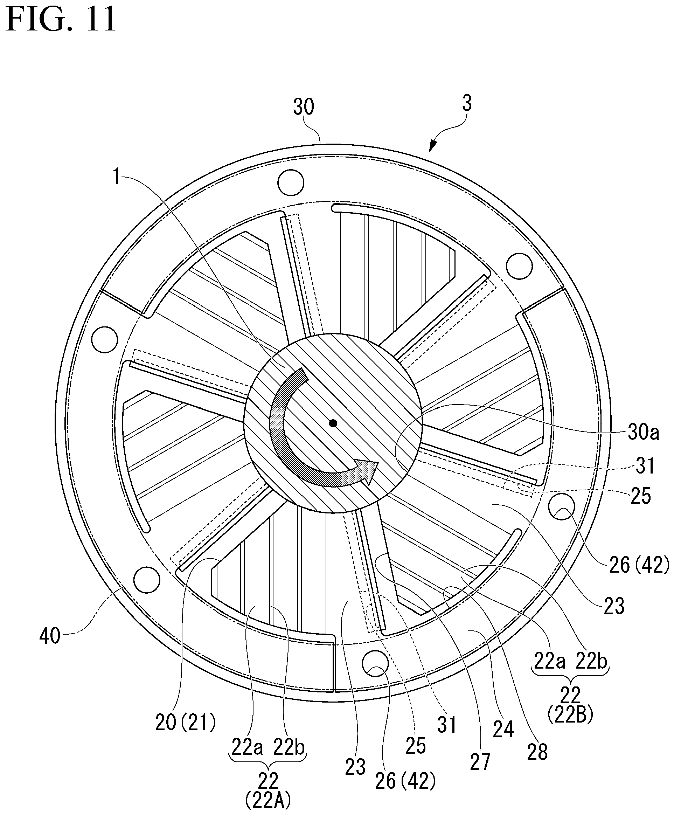

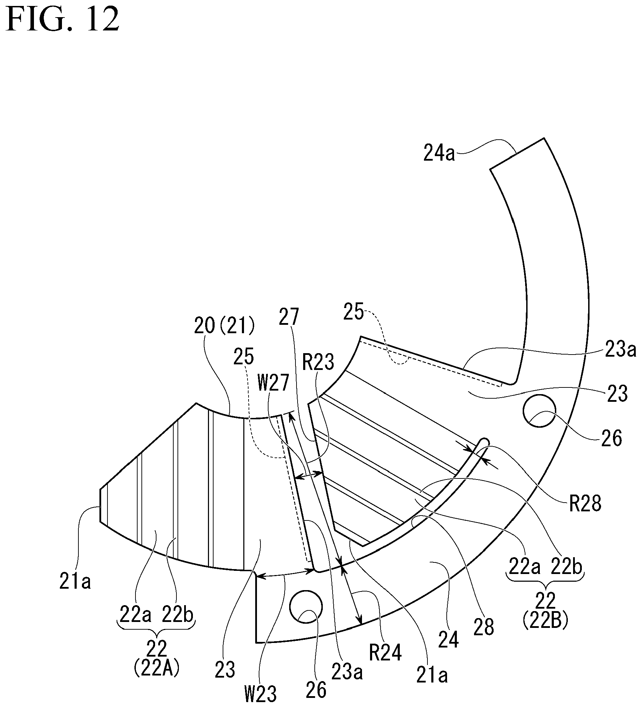

FIG. 9 is a plan view showing the thrust foil bearing 3 according to the second embodiment of the present disclosure. FIG. 10 is a plan view showing the top foil piece 11 provided in the thrust foil bearing 3 shown in FIG. 9. FIG. 11 is a plan view showing a state in which the top foil 10 is separated from the thrust foil bearing 3 shown in FIG. 9. FIG. 12 is a plan view showing the back foil piece 21 provided in the thrust foil bearing 3 shown in FIG. 9.

As shown in these drawings, in the second embodiment, two top foil pieces 11 and two back foil pieces 21 according to the first embodiment are combined. That is, the top foil 10 and the back foil 20 are each formed by three top foil pieces 11 and three back foil pieces 21.

As shown in FIG. 10, two inclined portions 12 are connected to the sandwiched portion 14 of the top foil piece 11 through the extension portion 13. An inclined portion 12A which is disposed on one side in the circumferential direction in two inclined portions 12 is connected to one circumferential end portion of the sandwiched portion 14 through the extension portion 13. Further, an inclined portion 12B which is disposed on the other side in the circumferential direction in two inclined portions 12 is connected to an intermediate position of the sandwiched portion 14 in the circumferential direction through the extension portion 13.

The other circumferential end portion 12a of the inclined portion 12A is separated from one circumferential end portion 13a of the extension portion 13 connected to the inclined portion 12B in the circumferential direction. That is, a second slit 18 is formed between the inclined portion 12A and the extension portion 13 connected to the inclined portion 12B. A circumferential dimension W18 of the second slit 18 of the present disclosure gradually increases as it goes outward in the radial direction. Further, the maximum circumferential dimension W18 of the second slit 18 of the present disclosure is smaller than the diameter of the through-hole 16 and is larger than the radial dimension R17 of the slit 17. Additionally, the dimension of the second slit 18 is an example and may not essentially have the above-described dimensional relationship.

The second slit 18 extends from the inner peripheral side to the outer peripheral side along the other circumferential end portion 12a of the inclined portion 12A and the outer peripheral end portion is connected to the slit 17. That is, the slit 17 and the second slit 18 (that is, the slit provided with a bend) which are connected in an L-shape in the plan view are disposed around the inclined portion 12A. Accordingly, the inclined portion 12A can be separated from the radially adjacent sandwiched portion 14 or the circumferentially adjacent extension portion 13 so as not to be restrained.

The sandwiched portion 14 is provided with two through-holes 16. Two through-holes 16 are disposed in the vicinity of the connection position each of two extension portions 13. Further, the sandwiched portion 14 has a circumferential length of about 120° (i.e., about 1/3 in the entire circumference) in the entire circumference of 360° of the bearing spacer 40. Accordingly, three top foil pieces 11 (and sandwiched portions 14) are sandwiched in the substantially entire circumference of the bearing spacer 40.

As shown in FIG. 11, the back foil 20 is formed by three back foil pieces 21 arranged in the circumferential direction. Two support portions 22 are connected to the sandwiched portion 24 of the back foil piece 21 through the flat portion 23. In two support portions 22, a support portion 22A disposed on one side in the circumferential direction is connected to one circumferential end portion of the sandwiched portion 24 through the flat portion 23. Further, in two support portions 22, a support portion 22B disposed on the other side in the circumferential direction is connected to an intermediate position of the sandwiched portion 24 in the circumferential direction through the flat portion 23.

As shown in FIG. 12, the other circumferential end portion 23a of the flat portion 23 connected to the support portion 22A is separated from one circumferential end portion of the support portion 22B and the back foil end portion 21a in the circumferential direction. That is, a first slit 27 is formed between the support portion 22B and the flat portion 23 connected to the support portion 22A. Additionally, the dimension of the first slit 27 is an example and may not essentially have the above-described dimensional relationship.

The first slit 27 extends from the inner peripheral side to the outer peripheral side along the other circumferential end portion 23a of the flat portion 23 connected to the support portion 22A and the outer peripheral end portion is connected to a second slit 28. The second slit 28 separates the outer radial end portion of the support portion 22B and the inner radial end portion of the sandwiched portion 24 in the radial direction. The second slit 28 extends from the connection position of the first slit 27 to the other side in the circumferential direction. That is, the sandwiched portion 24 is provided with the flat portion 23 formed at a different circumferential position and each of the support portions 22A and 22B is provided to extend. The first slit 27 (and the second slit 28) is interposed between these support portions 22A and 22B and the support portions 22A and 22B are independently deformable. That is, the support portion 22B may be referred to as the "second support portion" with respect to the support portion 22A and the flat portion 23 of the support portion 22B may be referred to as the "second flat portion".

A radial dimension R28 of the second slit 28 is substantially the same as the radial dimension R17 (see FIG. 10) of the slit 17 of the top foil 10. That is, the first slit 27 and the second slit 28 which are connected in an L-shape in the plan view are disposed around the support portion 22B. Accordingly, the support portion 22B can be separated from the radially adjacent sandwiched portion 14 or the circumferentially adjacent flat portion 23 so as not to be restrained.

The sandwiched portion 24 is provided with two through-holes 16. Two through-holes 16 are respectively disposed in the vicinity of the connection positions of two flat portions 23. Further, the sandwiched portion 24 a circumferential length of about 120° (i.e., about 1/3 in the entire circumference) in the entire circumference of 360° of the bearing spacer 40. Accordingly, three back foil pieces 21 (and sandwiched portions 24) are sandwiched in the substantially entire circumference of the bearing spacer 40.

According to the thrust foil bearing 3 with the above-described configuration, similarly to the above-described first embodiment, the top foil piece 11 and the back foil piece 21 can be attached to the base plate 30 by sandwiching the sandwiched portions 14 and 24 without welding. Therefore, it is possible to suppress the top foil 10 from being distorted and to suppress a decrease in load capacity of the thrust foil bearing 3.

Further, in the second embodiment, the plurality of inclined portions 12 are connected to the sandwiched portion 14 of the top foil piece 11 through the extension portion 13 and the plurality of support portions 22 are connected to the sandwiched portion 24 of the back foil piece 21 through the flat portion 23. Therefore, the number of the top foil pieces 11 and the back foil pieces 21 can be decreased, the number of components can be decreased, and the number of assembling steps can be decreased compared to the first embodiment.

Further, in the second embodiment, the sandwiched portion 14 of the top foil piece 11 is provided with the plurality of through-holes 16 and the sandwiched portion 24 of the back foil piece 21 is provided with the plurality of through-holes 26. Since the fastening bolt 41 is inserted through the plurality of through-holes 16 and 26 so that the rotation of the fastening bolt 41 around the top foil piece 11 and the back foil piece 21 is restricted, it is possible to more simply position the sandwiched portions 14 and 24.

### (Third Embodiment)

Next, a third embodiment of the present disclosure will be described. In the following description, the same or equivalent configurations as those in the above-described embodiment are designated by the same reference numerals, and the description thereof will be simplified or omitted.

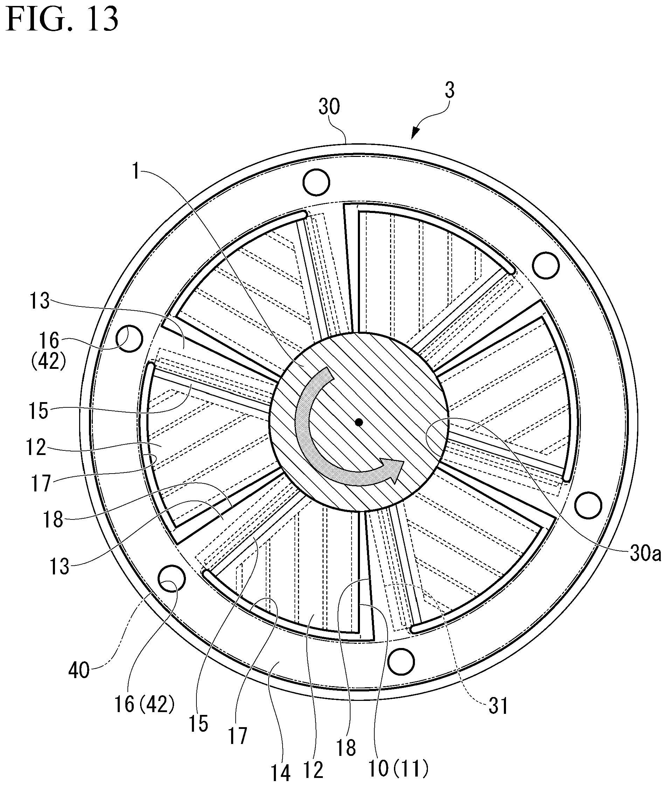

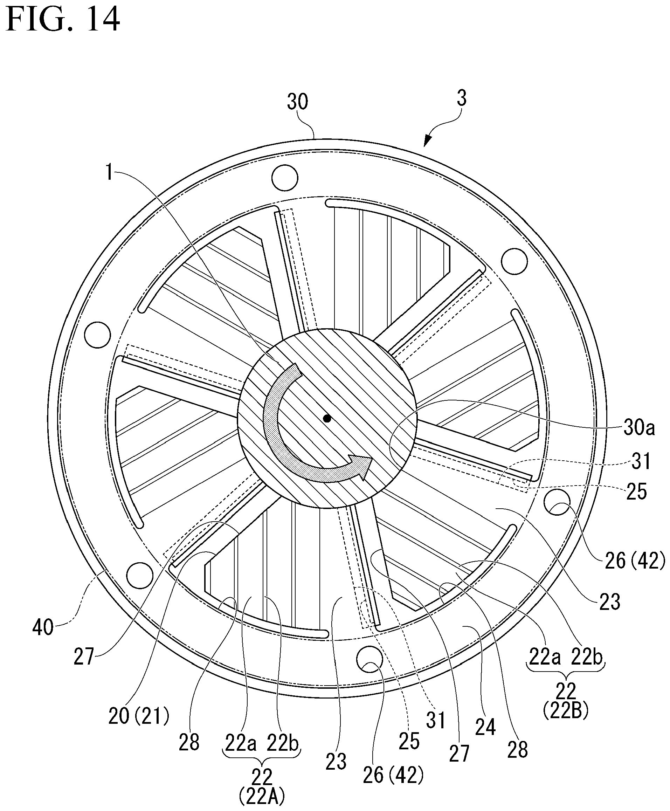

FIG. 13 is a plan view showing the thrust foil bearing 3 according to the third embodiment of the present disclosure. FIG. 14 is a plan view showing a state in which the top foil 10 is separated from the thrust foil bearing 3 shown in FIG. 13. As shown in these drawings, in the third embodiment, the top foil piece 11 and the back foil piece 21 according to the above-described embodiment are respectively combined. That is, the top foil 10 and the back foil 20 are each formed by one foil (i.e., top foil piece 11 and back foil piece 21).

As shown in FIG. 13, the top foil 10 includes six inclined portions 12. That is, six inclined portions 12 are connected to the sandwiched portion 14 of the top foil 10 through the extension portion 13. The sandwiched portion 14 is formed in an annular shape similarly to the bearing spacer 40. Six inclined portions 12 are connected at the interval of 60° in the circumferential direction of the sandwiched portion 14 through the extension portion 13. Each of six inclined portions 12 is separated from the radially adjacent sandwiched portion 14 or the circumferentially adjacent extension portion 13 so as not to be restrained by the slit 17 and the second slit 18. Further, the sandwiched portion 14 is provided with six through-holes 16 which are formed at the interval of 60° in the circumferential direction.

Further, as shown in FIG. 14, the back foil 20 includes six support portions 22. That is, six support portions 22 are connected to the sandwiched portion 24 of the back foil 20 through the flat portion 23. The sandwiched portion 24 is formed in an annular shape similarly to the bearing spacer 40. Six support portions 22 are connected at the interval of 60° in the circumferential direction of the sandwiched portion 24 through the flat portion 23. Each of six support portions 22 is separated from the radially adjacent sandwiched portion 24 or the circumferentially adjacent flat portion 23 so as not to be restrained by the slit 17 and the second slit 18. Further, the sandwiched portion 24 is provided with six through-holes 26 which are formed at the interval of 60° in the circumferential direction.

According to the thrust foil bearing 3 with the above-described configuration, the top foil 10 and the back foil 20 can be attached to the base plate 30 by sandwiching the sandwiched portions 14 and 24 without welding similarly to the above-described embodiment. Therefore, it is possible to suppress a decrease in load capacity of the thrust foil bearing 3 without causing distortion in the top foil 10.

Further, in the third embodiment, the sandwiched portions 14 and 24 are formed in an annular shape. Therefore, the sandwiched portions 14 and 24 can be sandwiched in the entire circumference by the bearing spacer 40. Further, since the sandwiched portions 14 and 24 are formed in an annular shape so that the top foil 10 and the back foil 20 are each formed by one foil, it is possible to decrease the number of components and to decrease the number of assembling steps.

### (Fourth Embodiment)

Next, a fourth embodiment of the present disclosure will be described. In the following description, the same or equivalent configurations as those in the above-described embodiment are designated by the same reference numerals, and the description thereof will be simplified or omitted.

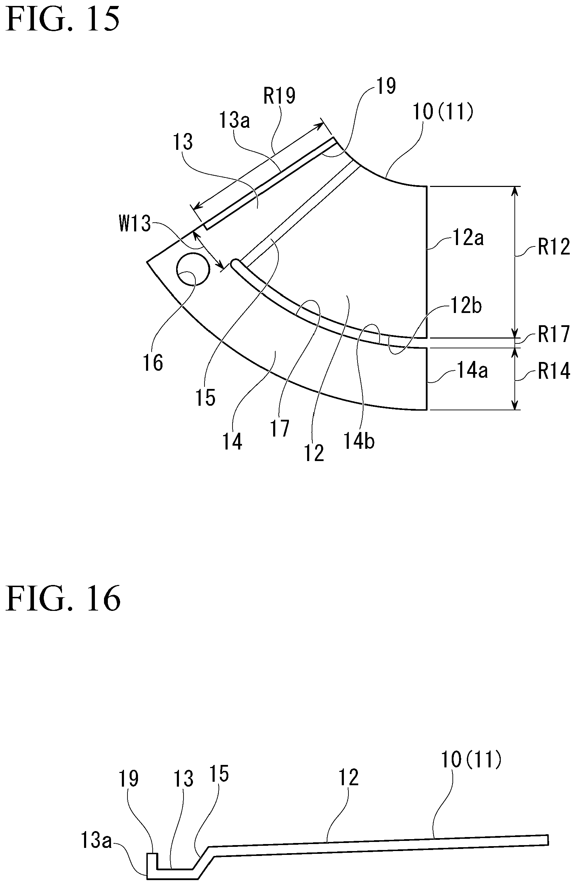

FIG. 15 is a plan view showing the top foil 10 according to the fourth embodiment of the present disclosure. FIG. 16 is a circumferential cross-sectional view passing through the inclined portion 12 and the extension portion 13 of the top foil 10 shown in FIG. 15. As shown in these drawings, in the fourth embodiment, one circumferential end portion 13a of the extension portion 13 of the top foil 10 is provided with a bent portion 19 which is bent toward the side opposite to the base plate 30.

As shown in FIG. 16, the bent portion 19 is bent at a substantially right angle to the side opposite to the base plate 30 (i.e., the upper side of the paper surface in FIG. 16). The axial position of the front end of the bent portion 19 is located on the lower side (i.e., the side of the base plate 30) in relation to the axial position of one circumferential end portion of the inclined portion 12. The bent line of the bent portion 19 extends linearly in the radial direction as shown in FIG. 15. That is, the bent line of the bent portion 19 extends in parallel to one circumferential end portion 13a of the extension portion 13.

A radial dimension R19 of the bent portion 19 is substantially the same as the radial dimension R12 of the inclined portion 12. Additionally, the radial dimension R19 of the bent portion 19 may be larger than the radial dimension R12 of the inclined portion 12. That is, the radial dimension R19 of the bent portion 19 may be a length in which the radial dimension R17 of the slit 17 is added to the radial dimension R12 of the inclined portion 12. Accordingly, the bent portion 19 extends to a connection portion (i.e., neck portion) between the extension portion 13 and the sandwiched portion 14.

According to the top foil 10 with the above-described configuration, since one circumferential end portion 13a of the extension portion 13 is provided with the bent portion 19 bent toward the side opposite to the base plate 30, it is possible to increase the rigidity (i.e., second moment of area) of the extension portion 13 against bending in the radial direction. Thus, the floating of the inclined portion 12 cantilevered and supported by the extension portion 13 on the inner side in the radial direction can be suppressed on the outer side in the radial direction.

That is, the inclination direction of the support portion 22 of the back foil 20 is perpendicular to the other circumferential end portion of the support portion 22, but the inclination direction of the inclined portion 12 of the top foil 10 is perpendicular to one circumferential end portion of the inclined portion 12. Accordingly, their inclination directions are different from each other. In addition, the inclined portion 12 is installed to be pressed against the support portion 22 in advance. Therefore, the inner side of the inclined portion 12 in the radial direction is first in contact with the support portion 22 and the inner side of the inclined portion 12 in the radial direction is pressed upward by a force so that floating is likely to occur. Further, since the circumferential speed with the thrust collar 4 is low on the inner side in the radial direction, the pressure of the fluid lubrication film is low and the contact with the thrust collar 4 is likely to occur. Therefore, it is possible to form the bent portion 19 on the inclined portion 12 and press the support portion 22 on the inner side in the radial direction in advance from the state where the speed is zero to lower the height.

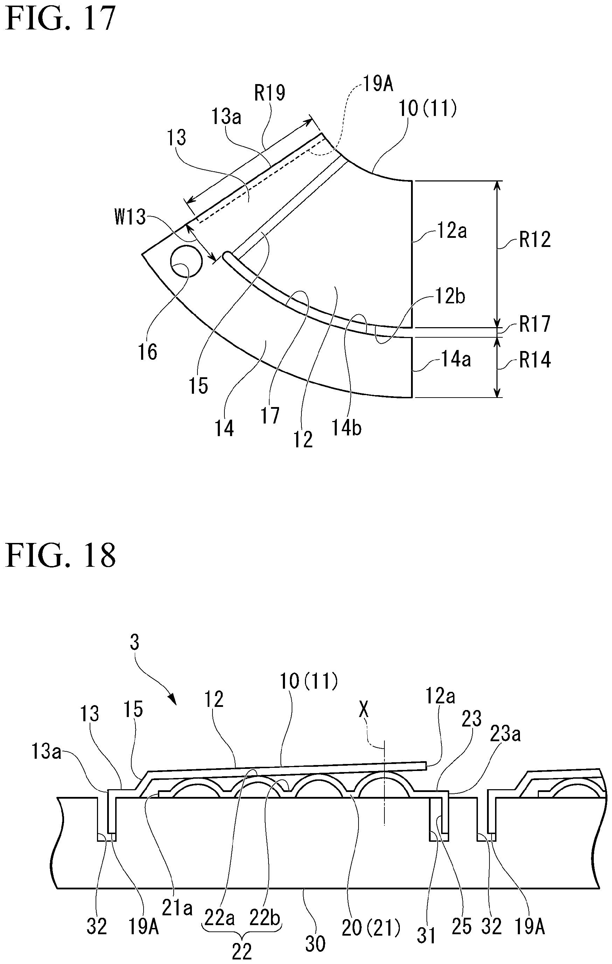

Further, in the fourth embodiment, the modified example shown in FIGs. 17 and 18 can be adopted. FIG. 17 is a plan view showing the top foil 10 according to the modified example of the fourth embodiment of the present disclosure. FIG. 18 is a circumferential cross-sectional view passing through the inclined portion 12 and the extension portion 13 of the top foil 10 shown in FIG. 17. As shown in these drawings, the top foil 10 may include a bent portion 19A which is formed at one circumferential end portion 13a of the extension portion 13 to be bent toward the base plate 30.

As shown in FIG. 18, the bent portion 19A is formed by bending the bent portion 19 at a substantially right angle to the side toward the base plate 30 (i.e., lower side of the paper surface in FIG. 18). The base plate 30 is provided with an insertion groove 32 into which the bent portion 19A of the top foil 10 is inserted. The insertion groove 32 is formed to be circumferentially separated from the insertion groove 31 into which the bent portion 25 of the back foil 20 is inserted. The bent portion 19A inserted into the insertion groove 32 is able to contact the side wall surface of the insertion groove 32 on the other side in the circumferential direction.

According to the top foil 10 with the above-described configuration, it is possible to increase the rigidity (i.e., second moment of area) of the extension portion 13 against bending in the radial direction by the bent portion 19A which is bent toward the base plate 30 similarly to the bent portion 19. Thus, the floating of the inclined portion 12 cantilevered and supported by the extension portion 13 on the inner side in the radial direction can be suppressed on the outer side in the radial direction.

Further, in this embodiment, the base plate 30 is provided with the insertion groove 32 into which the bent portion 19A is inserted. Accordingly, when the inclined portion 12 is pressed toward the base plate 30, the bent portion 19A comes into contact with the side wall surface of the insertion groove 32 on the other side in the circumferential direction so that the movement of the top foil 10 (and inclined portion 12) toward the other side in the circumferential direction can be restricted.

### (Fifth Embodiment)

Next, a fifth embodiment of the present disclosure will be described. In the following description, the same or equivalent configurations as those in the above-described embodiment are designated by the same reference numerals, and the description thereof will be simplified or omitted.

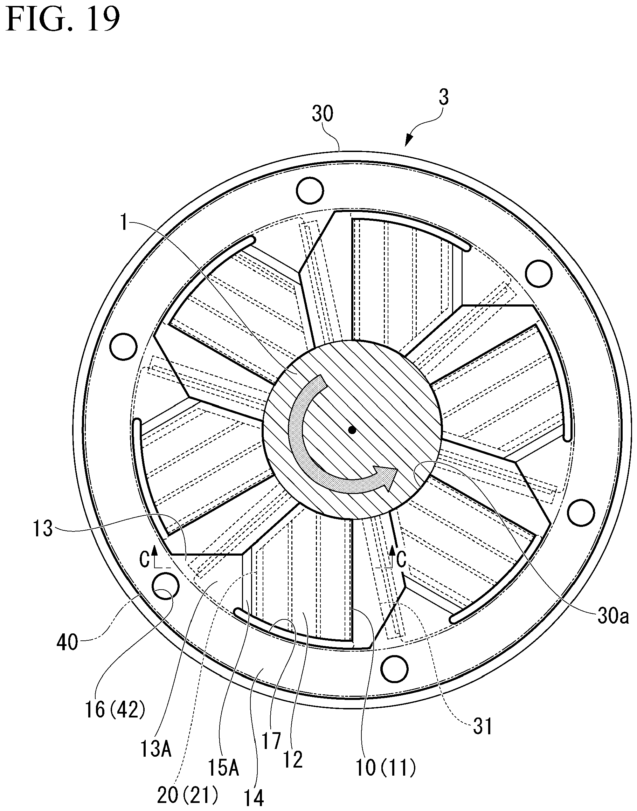

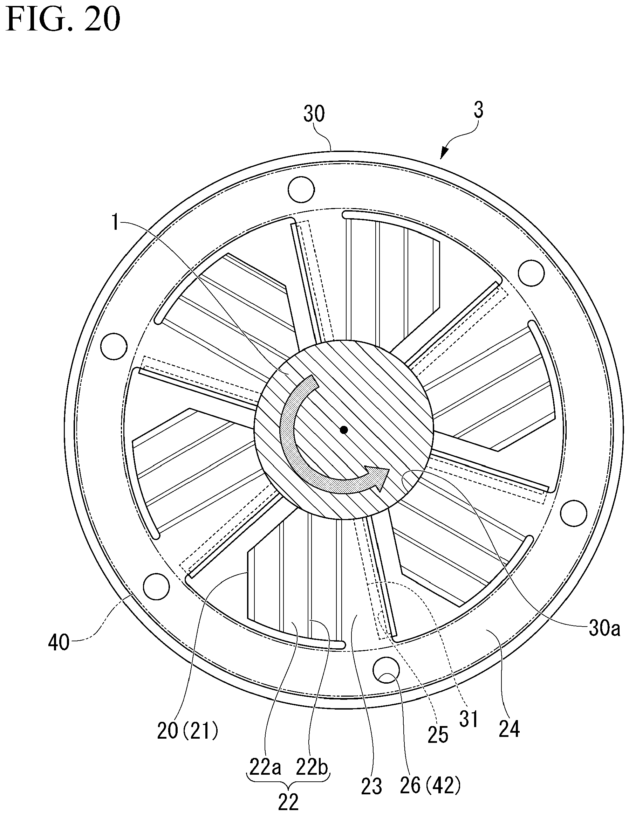

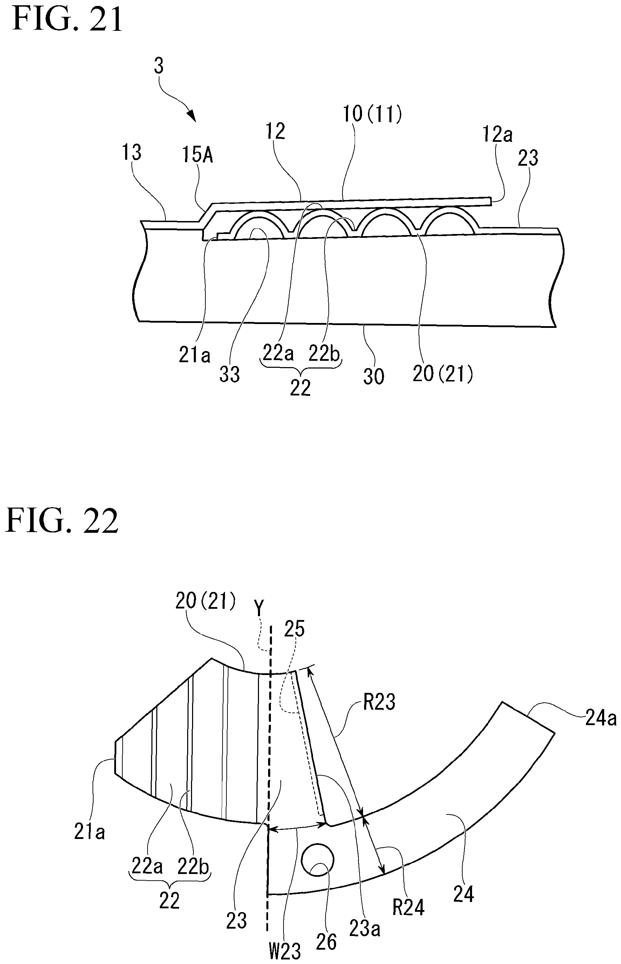

FIG. 19 is a plan view showing the thrust foil bearing 3 according to the fifth embodiment of the present disclosure. FIG. 20 is a plan view showing a state in which the top foil 10 is separated from the thrust foil bearing 3 shown in FIG. 19. FIG. 21 is a view of C-C shown in FIG. 19. As shown in these drawings, in the fifth embodiment, the inclination direction of the inclined portion 12 of the top foil 10 matches the inclination direction of the support portion 22 of the back foil 20. Additionally, the top foil 10 and the back foil 20 are each formed by one foil (i.e., top foil piece 11 and back foil piece 21) similarly to the above-described third embodiment.

As shown in FIG. 21, in the base plate 30, an inclined surface 33 is formed on a portion where the support portion 22 of the back foil 20 is disposed. The inclined surface 33 is formed to be gradually lowered as it goes toward the back foil end portion 21a. On the other hand, all peak portions 22a of the support portion 22 are formed at a constant height. Thus, the inclined portion 12 of the top foil 10 supported by the support portion 22 disposed on the inclined surface 33 is parallel to the inclined surface 33, but is inclined at an initial inclination angle to be gradually separated with respect to the flat surface of the base plate 30. That is, the inclined portion 12 is parallel to the inclined surface 33, but is inclined with respect to the flat surface orthogonal to the axial direction of the base plate 30.

As shown in FIG. 19, the other circumferential end portion (i.e., bent portion 15A) of the inclined portion 12 of the top foil 10 extends in parallel to the back foil end portion 21a of the back foil 20. Since the inclination direction of the inclined portion 12 is perpendicular to the bent portion 15A (and back foil end portion 21a), the inclination direction matches the inclination direction of the support portion 22 of the back foil 20. An extension portion 13A of the top foil 10 is formed in a substantially right-angled triangular shape in a plan view shown in FIG. 19 in order to connect the bent portion 15A to the sandwiched portion 14. Additionally, the back foil 20 shown in FIG. 20 has the same configuration as that of the back foil 20 of the above-described third embodiment.

According to the thrust foil bearing 3 with the above-described configuration, since the inclination direction of the support portion 22 of the back foil 20 matches the inclination direction of the inclined portion 12 of the top foil 10, the inner side of the inclined portion 12 in the radial direction does not come into contact with the support portion 22 first and the floating of the inclined portion 12 on the inner side in the radial direction is less likely to occur.

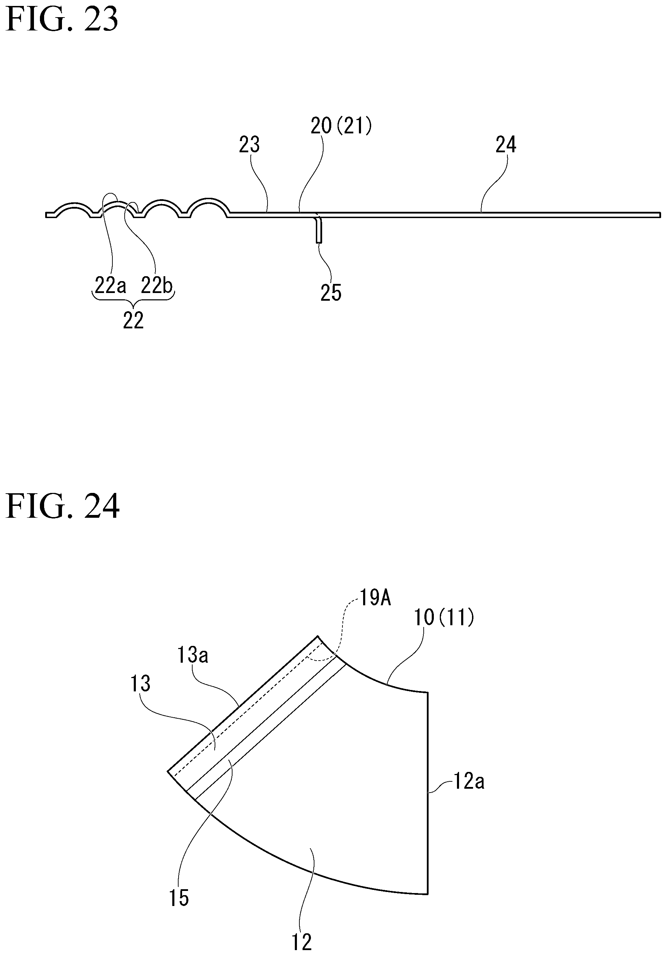

Further, in the fifth embodiment, the modified example shown in FIGs. 22 and 23 can be adopted.

FIG. 22 is a plan view showing the back foil 20 according to the modified example of the fifth embodiment of the present disclosure. FIG. 23 is a side view of the back foil 20 according to another modified example of the fifth embodiment of the present disclosure. As shown in these drawings, the back foil 20 may be formed by the plurality of back foil pieces 21 similar to those in the first embodiment.

The back foil piece 21 shown in FIG. 22 is provided with a bending line Y which is formed at a connection portion between the support portion 22 and the flat portion 23 to extend in the radial direction. Additionally, the height of the peak portion 22a of the support portion 22 is constant and the peak portion is disposed on the inclined surface 33. On the other hand, the height of the peak portion 22a of the support portion 22 of the back foil piece 21 shown in FIG. 23 is gradually increased in order from the back foil end portion 21a toward the other circumferential end portion of the support portion 22. This support portion 22 is supported by the flat surface of the base plate 30. The bent portion 25 is formed in each of the back foil pieces 21 of FIGs. 22 and 23.

### (Sixth Embodiment)

Next, a sixth embodiment of the present disclosure will be described. In the following description, the same or equivalent configurations as those in the above-described embodiment are designated by the same reference numerals, and the description thereof will be simplified or omitted.

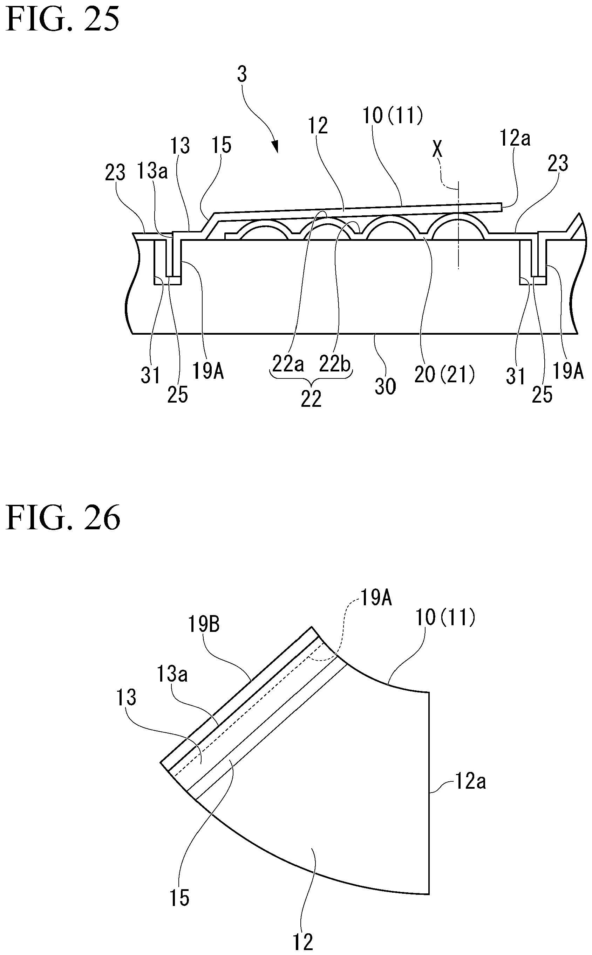

FIG. 24 is a plan view showing the top foil 10 according to the sixth embodiment of the present disclosure. FIG. 25 is a cross-sectional view showing an attachment structure of the top foil 10 with respect to the base plate 30 shown in FIG. 24. As shown in these drawings, in the sixth embodiment, the top foil 10 is not provided with the sandwiched portion 14.

As shown in FIG. 24, such a top foil 10 is provided with the bent portion 19A which is bent toward the base plate 30 similarly to the modified example of the above-described fourth embodiment. The bent portion 19A (i.e., end portion) of the top foil 10 is inserted into the insertion groove 31 where the bent portion 25 of the back foil 20 is inserted. The bent portion 19A which is inserted into the insertion groove 31 is sandwiched between the side wall surface of the insertion groove 31 on the other side in the circumferential direction and the bent portion 25 of the back foil 20. According to the top foil 10 with the above-described configuration, the back foil 20 can impart a holding force for holding the top foil 10 to the base plate 30.

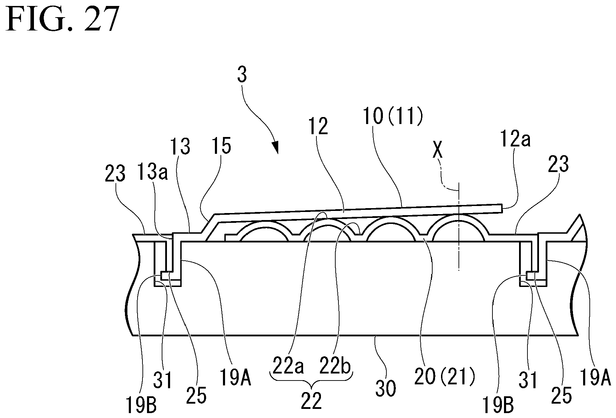

Further, in the sixth embodiment, the modified example shown in FIGs. 26 and 27 can be adopted.

FIG. 26 is a plan view showing the top foil 10 according to the modified example of the sixth embodiment of the present disclosure. FIG. 27 is a cross-sectional view showing an attachment structure of the top foil 10 with respect to the base plate 30 shown in FIG. 26. As shown in these drawings, the top foil 10 may include a second bent portion 19B which is further bent with respect to the bent portion 19A.

As shown in FIG. 27, the second bent portion 19B is further bent at a substantially right angle to the bent portion 19A and extends from the bent portion 19A to one side in the circumferential direction. The upper surface (i.e., flat surface) of the second bent portion 19B is able to come into contact with the end portion of the bent portion 25 of the back foil 20 accommodated in the insertion groove 31 in a reverse insertion direction (in FIG. 27, the direction toward the upper side of the paper surface or the axial direction from the back surface side not supporting the back foil 20 toward the support surface supporting the back foil 20). According to the top foil 10 with the above-described configuration, since the second bent portion 19B prevents the separation of the bent portion 19A inserted into the insertion groove 31, the stability of the attachment structure of the top foil piece 11 with respect to the base plate 30 is increased.

### (Seventh Embodiment)

Next, a seventh embodiment of the present disclosure will be described. In the following description, the same or equivalent configurations as those in the above-described embodiment are designated by the same reference numerals, and the description thereof will be simplified or omitted.

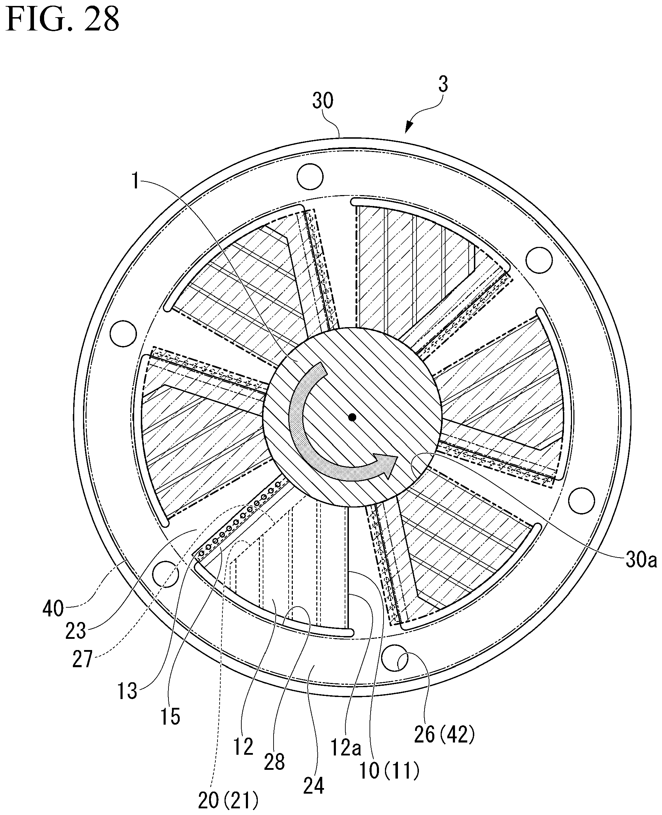

FIG. 28 is a plan view showing the thrust foil bearing 3 according to the seventh embodiment of the present disclosure. As shown in these drawings, in the seventh embodiment, the top foil 10 not provided with the sandwiched portion 14 is attached to the back foil 20 provided with the sandwiched portion 24.

In such a top foil 10, one circumferential end portion (corresponding to the extension portion 13) is spot-welded (i.e., dot-welded) to the flat portion 23 of the back foil 20. That is, this welding position is the attachment position of the top foil piece 11 with respect to the back foil 20. Further, the attachment position of the top foil piece 11 is disposed to be separated to one side in the circumferential direction in relation to the support portion 22. Further, the other circumferential end portion 12a of the top foil piece 11 is a free end. That is, when a load is applied to the top foil piece 11, the other circumferential end portion 12a can be moved toward the other side in the circumferential direction.

According to the thrust foil bearing 3 with the above-described configuration, since the plurality of top foil pieces 11 are attached to one back foil 20, the thrust foil bearing 3 is easily assembled when the top foil piece 11 is attached to the back foil 20 in advance.

The present disclosure has been described above. However, the present disclosure does not preclude the combined use of welding (i.e., spot welding). As long as the thrust foil bearing 3 can exhibit a sufficient load capacity, back foil attachment by sandwiching and welding (i.e., spot welding) may be used in combination.

### [Industrial Applicability]

According to the present disclosure, it is possible to provide a method of attaching a back foil by sandwiching. Further, it is possible to suppress a decrease in load capacity of a thrust foil bearing due to distortion of a top foil.

### [Reference Signs List]

- 1: Rotation shaft (i.e., shaft)
- 2: Impeller
- 3: Thrust foil bearing
- 4: Thrust collar
- 5: Housing
- 6: Tip clearance
- 7: Radial foil bearing
- 10: Top foil
- 11: Top foil piece
- 12: Inclined portion
- 13: Extension portion
- 14: Sandwiched portion
- 15: Bent portion
- 15A: Bent portion
- 16: Through-hole
- 17: Slit
- 18: Second slit
- 19: Bent portion
- 19A: Bent portion
- 19B: Second bent portion
- 20: Back foil
- 21: Back foil piece
- 22: Support portion
- 22a: Peak portion
- 22b: Valley portion
- 23: Flat portion
- 24: Sandwiched portion
- 25: Bent portion
- 26: Through-hole
- 27: First slit
- 28: Second slit
- 30: Base plate
- 30a: Insertion hole
- 31: Insertion groove
- 32: Insertion groove
- 33: Inclined surface
- 40: Bearing spacer
- 41: Fastening bolt
- 42: Through-hole

## Claims

1. A thrust foil bearing comprising:
a base plate provided with an insertion hole into which a shaft is inserted;
a back foil that is disposed around the insertion hole; and
a sandwiched portion which extends from an end portion of the back foil in a circumferential direction of the insertion hole to an outer side in a radial direction of the insertion hole.

2. The thrust foil bearing according to claim 1, wherein
an annular member is attached to the base plate, and
the sandwiched portion is sandwiched between the base plate and the annular member.

3. The thrust foil bearing according to claim 2, further comprising:
a fastening member configured to attach the annular member to the base plate,
wherein the sandwiched portion is formed with a through-hole into which the fastening member is inserted.

4. The thrust foil bearing according to claim 3, wherein
a plurality of the through-holes are formed in the sandwiched portion.

5. The thrust foil bearing according to any one of claims 1 to 4, wherein
the sandwiched portion is formed in an annular shape.

6. The thrust foil bearing according to any one of claims 1 to 5, wherein
the back foil includes:
a support portion in which a peak portion and a valley portion are alternately formed; and
a flat portion which extends in a circumferential direction from the valley portion disposed at an end portion of the support portion, and
the sandwiched portion is connected to the flat portion.

7. The thrust foil bearing according to claim 6, wherein
the sandwiched portion is provided with a second flat portion which is formed at a circumferential position different from that of the flat portion, and
the sandwiched portion is provided with a second support portion which is connected to the second flat portion and is independent from the support portion.

8. The thrust foil bearing according to claim 6 or 7, wherein
a circumferential end portion of the flat portion is provided with a bent portion which is bent toward the base plate.

9. The thrust foil bearing according to claim 8, wherein
the base plate is provided with an insertion groove into which the bent portion is inserted.

10. The thrust foil bearing according to claim 9, wherein
an end portion of a top foil supported by the back foil is inserted into the insertion groove.

11. The thrust foil bearing according to claim 10, wherein
an end portion of the top foil is provided with a second bent portion which comes into contact with an end portion of the bent portion accommodated in the insertion groove in a reverse insertion direction.

12. The thrust foil bearing according to any one of claims 6 to 8, further comprising:
a top foil which is attached to the flat portion.
